Europäisches Patentamt

European Patent Office

Office européen des brevets

(11) Publication number: **0 089 189**
**B1**

## EUROPEAN PATENT SPECIFICATION

(45) Date of publication of patent specification: **11.06.86**

(51) Int. Cl.⁴: **C 02 F 5/14,** C 02 F 5/10

(21) Application number: **83301332.9**

(22) Date of filing: **10.03.83**

(54) A calcium carbonate, magnesium hydroxide and calcium sulfate hemihydrate scale inhibitor.

(30) Priority: **11.03.82 US 357026**

(43) Date of publication of application:
**21.09.83 Bulletin 83/38**

(45) Publication of the grant of the patent:
**11.06.86 Bulletin 86/24**

(84) Designated Contracting States:
**FR GB IT NL**

(56) References cited:
**DE-A-2 643 422**
**GB-A-1 414 918**
**US-A-4 028 239**
**US-A-4 048 065**
**US-A-4 163 733**
**US-A-4 255 259**

(73) Proprietor: **CALGON CORPORATION**
**Route 60-Campbell's Run Road**
**Robinson Township Pennsylvania 15205 (US)**

(72) Inventor: **Logan, Douglas P.**
**150 Rivercrest Drive**
**Coraopolis Pennsylvania 15108 (US)**
Inventor: **Walker, Jerry L.**
**210 Norman Drive**
**Coraopolis Pennsylvania 15108 (US)**

(74) Representative: **Crampton, Keith John Allen**
**et al**
**D YOUNG & CO 10 Staple Inn**
**London WC1V 7RD (GB)**

Courier Press, Leamington Spa, England.

## Description

A major operating problem in seawater distillation plants and reverse osmosis systems is the formation of calcium carbonate, magnesium hydroxide and calcium sulfate scales which reduce heat transfer, plug tubes and ultimately lower the rated capacity of a plant. In one study of fifty-five desalination plants around the world, scale buildup was the principal cause of reduced or lost production and plant shutdowns. From a design standpoint, the heat transfer surface area in a plant constitutes about 30% of the total cost, and the fouling tendency may require a 20 to 25% excess design allowance. This could represent 6% of the unit cost.

The effect of scale on heat transfer surfaces is equivalent to coating the surface with an effective insulating material. For example, a 5 mil (0.13 mm) thick calcium carbonate scale can reduce the heat transfer coefficient as much as 75%. Increased energy and maintenance costs, as well as plant shutdowns, are some of the economic penalties resulting from scale deposition in thermal desalination systems.

The two major methods of scale control currently practiced in thermal desalination plants to mitigate alkaline scale (calcium carbonate and magnesium hydroxide) are mineral acid neutralization of the seawater bicarbonate alkalinity with subsequent decarbonation, or the addition of formulated additives. The method used to prevent calcium sulfate scale is to control the temperature and brine concentration so that it stays below the supersaturated region for hemihydrate ($CaSO_4 \cdot 1/2H_2O$) formation.

Impurities in crystallization processes sometimes modify the shapes of crystals and/or retard their growth rates. These scale inhibitors are added to aqueous systems to either control the rate of crystallization or modify the morphology of the scale crystal.

Additives may act to stifle scale formation by one of several possible routes. They may change the chemical potential of the precipitating salt by affecting complex formation and adsorption. Additives may also form a film on the metal surface, thus eliminating potential adhering activation sites. They may adsorb onto the growing crystals, thus distorting and/or inhibiting further crystal formation; or they may adsorb onto the precipitating ions, thus inhibiting scale nucleation. It is likely that effective inhibitors function through more than one of the above routes.

"Threshold" inhibition is time related. Once supersaturation has occurred, precipitation is inevitable, regardless of the presence of a threshold inhibitor. A threshold inhibitor can retard crystallization for a sufficiently long period of time such that the supersaturated solution is removed from the critical heat transfer surfaces of the system before crystallization begins. However, the period that such precipitation can be prevented is also a function of other factors, such as the degree of supersaturation. If precipitation occurs in the presence of a threshold inhibitor, because retention time is too great or a driving force is too great, the crystals which form are normally modified from their typical lattice structures. This modification can occur through the use of additives that are not particularly effective threshold scale inhibitors. Chelants and high molecular weight anionic polymers are examples of crystal modifiers.

U.S. Patent US—A—3,444,054 discloses the use of methacrylic acid polymers to control saline water scale.

U.S. Patent US—A—3,505,238 discloses the use of aminomethylene phosphonates with other additives to inhibit the deposition of scale in saline water evaporators. The reference discloses a particularly effective method of treatment of evaporators which involves partial neutralization of the sea water bicarbonate alkalinity with sulfuric acid and the concurrent use of phosphonate formulations and a catalyzed oxygen scavenger to prevent scale and corrosion. The use of hydrolyzed polyacrylamide in combination with the aminomethylene phosphonates is also disclosed.

U.S. Patent US—A—3,810,834 discloses the use of polymaleic acid and its salt to prevent alkaline-earth metal scale on a surface submerged in water and aqueous systems or to modify the scale to facilitate its removal.

U.S. Patent US—A—4,105,551 discloses the use of a telomeric phosphorus-containing compound alone or in combination with other known scale inhibitors and/or sequestrants to prevent the precipitation of the scale-forming salts of calcium, magnesium, barium and strontium in saline water desalination processes.

U.S. Patent US—A—4,163,733 discloses the use of dimethylaminomethylenebis(phosphonic acid) in combination with water-soluble carboxylic acid polymers for use as a corrosion and scale inhibitor in aqueous systems.

U.S. Patent US—A—4,200,500 describes the addition of a copolymer of maleic acid anhydride and long-chain unsaturated hydrocarbons to increase the solubility of calcium and magnesium salts in a thermal desalination installation.

U.S. Patent US—A—4,204,953 discloses a method of inhibiting the deposition of alkaline scales in saline water by adding a mineral acid to neutralize part of the bicarbonate alkalinity, and also adding a scale inhibiting additive to the saline water.

U.S. Patent US—A—4,255,259 discloses the use of small quantities of a composition comprising a copolymer of styrene sulfonic acid and maleic anhydride or maleic acid, along with a water soluble organophosphonic acid compound, for preventing formation of scale and sludge deposits in steam-generating boilers.

**0 089 189**

U.K. Patent GB—A—1,414,918 discloses the use of hydrolysed copolymers of maleic anhydride in conjunction with phosphonic acids and sequestrants.

German Patent Application DE—A—2643422 discloses the use of certain carboxylic polymers in conjunction with phosphonic acids and sequestrants.

The above documents, in so far as they involve scale inhibition, are primarily concerned with the inhibition of calcium carbonate scale. The various additives disclosed are less effective in inhibiting either magnesium hydroxide or calcium sulfate hemihydrate scale.

The present invention is based on the unexpected discovery that a mixture of a polymaleic acid, or its salts, a phosphonic acid, or its salts, and an iron sequestrant that is a hydroxy acid are synergistic in inhibiting formation of all three types of scale, calcium carbonate, magnesium hydroxide and calcium sulfate hemihydrate.

The present invention provides an inhibitor of calcium carbonate, magnesium hydroxide and calcium sulfate hemihydrate scale, comprising a mixture of a polymaleic acid or a polymaleic acid salt, a phosphonic acid or a phosphonic acid salt, and an iron sequestrant that is a hydroxy acid.

The invention also provides a process for the control of calcium carbonate, magnesium hydroxide and calcium sulfate hemihydrate scale formation and deposition in thermal or reverse-osmosis desalination plants, comprising adding to the water 0.1 to 100 ppm, preferably 1.0 to 20 ppm, of a mixture of a polymaleic acid or its salt, a phosphonic acid or its salt, and an iron sequestrant that is a hydroxy acid.

Scale inhibitor mixtures of the invention have been found effective in inhibiting scale in either thermal desalination plants or reverse osmosis desalination systems. As mentioned above, various inhibitors are known that inhibit any two of the three primary scales; however the scale inhibitor mixture of the present invention has surprisingly been found effective at economically low levels of concentration in inhibiting all three types of potential scale, viz. calcium carbonate, magnesium hydroxide and calcium sulfate hemihydrate scale.

Any polymaleic acid, or its salts, such as those of sodium, potassium or ammonium, may be used. The polymaleic acid may be made by any of a variety of methods, for example, according to U.S. Patent US—A—3,810,834. It is preferred to use the potassium salt of polymaleic acid. It is also preferred that the polymaleic acid have a molecular weight under 10,000, as determined by light-scattering methods.

Any phosphonic acid, or its salts, may be used in the invention. Examples include 1-hydroxyethylidene-1,1-diphosphonic acid, diethylene triamine penta (methylene phosphonic acid), amino tri (methylene phosphonic acid), ethylenediamine tetra(methylene phosphonic acid), and hexamethylenediamine tetra(methylene phosphonic acid). The preferred phosphonic acids are 1-hydroxyethylidene-1,1-diphosphonic acid and diethylene triamine penta(methylene phosphonic acid).

Examples of the hydroxy acid used as the iron sequestrant include citric acid, tartaric acid, gluconic acid, and hydroxyacetic acid. The preferred iron sequestrant is citric acid.

The caustic alkali is added solely to raise the pH for easy handling of the mixture.

The scale inhibitor mixture may be added to the water at any point, preferably to the seawater makeup or to the recirculation brine.

The scale inhibitor mixture may contain other additives, such as antifoams.

The scale inhibitor mixture is effective at any pH. The pH in desalination systems, however, is generally about 6.5 to 9.5.

The following Examples are given to illustrate the invention and compare it with the prior art.

Examples 1 to 6

Steam was passed through a metal U tube to maintain the temperature at about 240°F (112°C). The U tube was immersed in a cylindrical cell. Seawater (pH 8.2) was passed through the cell at a rate of 600 ml/hr. After 24 hours, the scale deposited on the U tube was removed, weighed and analysed. The effectiveness is reported as % inhibition, defined by the equation:

$$\% \text{ inhibition} = \frac{\text{blank rate} - \text{inhibition rate}}{\text{blank rate}} \times 100$$

The scaling rates were determined by the equation:

$$\text{scale rate} = \frac{\text{weight of scale on tube (mg)}}{\text{test volume throughput (1)}}$$

The % inhibition of various scale inhibitor mixtures is indicated in Table I. Water and caustic alkali made up the remaining percentage of the inhibitor mixtures.

3

TABLE I
%, by weight

| Example | PMA[1] | HEDP[2] | PAA[3] | Citric acid | Gluconic acid | % Inhibition |
|---|---|---|---|---|---|---|
| Comparison Example 1 | 24.5 | — | — | — | — | 83 |
| Comparison Example 2 | 24.5 | 5 | — | — | — | 87 |
| Comparison Example 3 | 24.5 | 5 | 3 | — | — | 86 |
| Comparison Example 4 | 24.5 | — | — | 5 | — | 90 |
| 5 | 24.5 | 5 | — | 5 | — | 93 |
| 6 | 24.5 | 5 | — | — | 5 | 88 |

[1]PMA=polymaleic acid, molecular weight~5,000
[2]HEDP=1-hydroxyethylidene-1,1-diphosphonic acid
[3]PAA=polyacrylic acid, molecular weight~2,500

Examples 7 to 36

Scale inhibitor mixtures were prepared as indicated in Table II. Water and caustic made up the remaining percentage of the inhibitor mixtures. Caustic was added solely to raise the pH to 6.5 for easy handling.

TABLE II

| Scale inhibitor mixture | Active inhibitor (%, by weight) | | | | |
|---|---|---|---|---|---|
| | PMA[1] | HEDP[2] | DTPMP[3] | Citric acid | EDTA[4] |
| A | 21.0 | 5.5 | —. | 5 | — |
| B | 21.0 | — | 5.5 | 5 | — |
| C (Comparison) | 4.5 | 16.1 | — | — | 4.8 |

[1]PMA=polymaleic acid, molecular weight—5,000
[2]HEDP=1-hydroxyethylidene-1,1-diphosphonic acid
[3]DTPMP=diethylene triamine penta (methylene phosphonic acid)
[4]EDTA=ethylene diamine tetraacetic acid salts

Aqueous test solutions were prepared by adding varying concentrations of the scale inhibitor mixtures of Table II and one of the following $CaCO_3$, $Mg(OH)_2$ or $CaSO_4 \cdot 1/2H_2O$ to distilled water. Only one cation and one anion were present in each test. Table III shows the percent inhibition of three scales at varying concentrations, however, whenever a % inhibition is indicated in Table III for more than one scale at a specific concentration, the percent inhibition for each scale represents a separate test. The pH of the solution was adjusted to 6.5 by the addition of caustic solely for the purpose of handleability. The mixtures were allowed to stand at 60°C for 24 hours. Relative inhibitor effectiveness is determined by measuring the amount of remaining cation in solution relative to the amount of cation in solution in the absence of inhibitor. Percent inhibition as determined by the following formula are indicated in Table III:

$$\% \text{ inhibition} = \frac{\text{weight of precipitating ion in solution}}{\text{weight of ion initially present}} \times 100$$

4

TABLE III

| Example | Scale inhibitor mixture | Concentration (ppm) | % Inhibition | | |
|---|---|---|---|---|---|
| | | | CaCO$_3^a$ or | Mg(OH)$_2^b$ or | CaSO$_4 \cdot$ 1/2H$_2$O$^c$ |
| 7 | A | .5 | 90 | — | — |
| 8 | | 1.0 | 97 | — | — |
| 9 | | 2.0 | 97 | — | — |
| 10 | | 3.0 | 96 | — | — |
| 11—12 | | 5.0 | — | 91 | 92 |
| 13—14 | | 10.0 | — | 92 | 97 |
| 15 | | 15.0 | — | — | 97 |
| 16—17 | | 20.0 | — | 89 | 98 |
| 18 | B | .5 | 44 | — | — |
| 19 | | 1.0 | 70 | — | — |
| 20 | | 2.0 | 94 | — | — |
| 21 | | 3.0 | 97 | — | — |
| 22 | | 5.0 | — | 92 | — |
| 23—24 | | 10.0 | — | 90 | 99 |
| 25 | | 15.0 | — | — | 98 |
| 26—27 | | 20.0 | — | 93 | 98 |
| 28 | C | .5 | 88 | — | — |
| 29 | | .7 | 98 | — | — |
| 30 | | 1.0 | 98 | — | — |
| 31 | | 1.2 | 98 | — | — |
| 32 | | 5.0 | — | 92 | — |
| 33 | | 10.0 | — | 88 | — |
| 34—35 | | 20.0 | — | 92 | 54 |
| 36 | | 50.0 | — | — | 98 |

$^a$ 40 mg CA$^{++}$/1, 60 mg CO$_3^=$/1, pH=10.0
$^b$ 17 mg OH$^-$/1, 12.15 mg Mg$^{++}$/1, pH=10.5
$^c$ 200 mg Ca$^{++}$/1, 4800 mg SO$_4^=$/1, pH=7.0

**Claims**

1. An inhibitor of the formation of calcium carbonate, magnesium hydroxide and calcium sulfate hemihydrate scale, comprising a mixture of 10 to 50% by weight of a polymaleic acid or a salt of it, 5 to 25% by weight of a phosphonic acid or a salt of it, and 2.5 to 15% by weight of an iron sequestrant that is a hydroxy acid, the remainder being water and optionally caustic alkali and other additives.

2. A scale inhibitor as claimed in Claim 1, in which the salt of polymaleic acid is the potassium salt.

3. A scale inhibitor as claimed in Claim 1 or 2, in which the phosphonic acid is 1-hydroxyethylidene-1,1-diphosphonic acid or diethylene triamine penta(methylene phosphonic acid).

4. A scale inhibitor as claimed in any one of Claims 1 to 3, in which the iron sequestrant is citric acid.

5. A process for the control of the formation and deposition of calcium carbonate, magnesium hydroxide and calcium sulfate hemihydrate scale in thermal or reverse osmosis membrane desalination plants, comprising adding to the water 0.1 to 100 ppm of an inhibitor as claimed in claim 1.

6. A process as claimed in Claim 5, in which the amount of mixture added is 1 to 20 ppm.

7. A process as claimed in Claim 5 or 6, in which the salt of polymaleic acid is the potassium salt.

8. A process as claimed in any one of Claims 5 to 7, in which the phosphonic acid is as defined in Claim 3 and the hydroxy acid is citric acid.

## Patentansprüche

1. Inhibitor für die Bildung von Calciumcarbonat-, Magnesiumhydroxid- und Calciumsulfat-Hemihydrat-Ablagerungen, umfassend ein Gemisch aus 10 bis 50 Gew.-% einer Polymaleinsäure oder eines Salzes davon, 5 bis 25 Gew.-% einer Phosphonsäure oder eines Salzes davon, und 2,5 bis 15 Gew.-% eines Eisen-Sesquestriermittels, das eine Hydroxysäure ist, wobei der Rest Wasser und gegebenenfalls Ätzalkali oder andere Zusätze sind.

2. Inhibitor für Ablagerungen, wie in Anspruch 1 beansprucht, in dem das Salz der Polymaleinsäure das Kaliumsalz ist.

3. Inhibitor für Ablagerungen, wie in Anspruch 1 oder 2 beansprucht, in dem die Phosphonsäure 1-Hydroxyethyliden-1,1-diphosphonsäure oder Diethylentriamin-penta-(methylenphosphonsäure) ist.

4. Inhibitor für Ablagerungen, wie in einem der Ansprüche 1 bis 3 beansprucht, in dem das Eisen-Sequestriermittel Zitronensäure ist.

5. Verfahren zur Steuerung der Bildung und Abscheidung von Calciumcarbonat-, Magnesiumhydroxid- und Calcium-sulfat-Hemihydrat-Ablagerungen in thermischen Entsalzungsanlagen oder Entsalzungsanlagen mit Umkehrosmose-Membran, durch Zusatz zu dem Wasser von 0,1 bis 100 ppm eines Inhibitors, wie in Anspruch 1 beansprucht.

6. Verfahren, wie in Anspruch 5 beansprucht, bei dem die Menge des zugesetzten Gemischs 1 bis 20 ppm beträgt.

7. Verfahren, wie in Anspruch 5 oder 6 beansprucht, bei dem das Salz der Polymaleinsäure das Kaliumsalz ist.

8. Verfahren, wie in einem der Ansprüche 5 bis 7 beansprucht, bei dem die Phosphonsäure wie in Anspruch 3 definiert ist und die Hydroxysäure Zitronensäure ist.

## Revendications

1. Inhibiteur de formation d'incrustation de carbonate de calcium, hydroxyde de magnésium et d'hémihydrate du sulfate de calcium, comprenant un mélange de 10 à 50% en poids d'un acide polymaléique ou son sel, 5 à 25% en poids d'un acide phosphonique ou son sel, et 2,5 à 15% en poids d'un séquestrant du fer qui est un acide hydroxy, le complément étant de l'eau et éventuellement de l'alcali caustique ou autres additifs.

2. Inhibiteur d'incrustation selon la revendication 1, dans lequel le sel de l'acide polymaléique est le sel de potassium.

3. Inhibiteur d'incrustation selon la revendication 1 ou 2, dans lequel l'acide phosphonique est l'acide 1-hydroxyéthylidène-1,1-diphosphonique ou l'acide diéthylène triamine penta(méthylène phosphonique).

4. Inhibiteur d'incrustation selon l'une quelconque des revendications 1 à 3, dans lequel le séquestrant du fer est l'acide citrique.

5. Procédé pour limiter la formation et le dépôt d'incrustation de carbonate de calcium, hydroxyde de magnésium et d'hémihydrate du sulfate de calcium dans les unités de désalinisation thermiques ou à membrane d'osmose inverse, comprenant l'addition à l'eau de 0,1 à 100 ppm d'un inhibiteur selon la revendication 1.

6. Procédé selon la revendication 5, dans lequel la quantité de mélange ajouté est de 1 à 20 ppm.

7. Procédé selon la revendication 5 ou 6 dans lequel le sel de l'acide polymaléique est le sel de potassium.

8. Procédé selon l'une quelconque des revendications 5 à 7 dans lequel l'acide phosphonique est défini selon la revendication 3 et l'acide hydroxy est l'acide citrique.